# EUROPEAN PATENT APPLICATION

(11) **EP 4 684 981 A1**
(43) Date of publication of application: **28.01.2026**
(21) Application number: 25191297.8
(22) Date of filing: 23.07.2025
(51) Int. Cl.: B60C 1/00, C08L 23/22

(54) **TIRE INNER LINER COMPOSITIONS**

(30) Priority: 27.07.2024 US 202463676341 P
(71) Applicant: Kraton Polymers Nederland B.V., 1322 CE Almere (NL)
(72) Inventor: Bhattacharya, Aparajita, Houston, 77084 (US)
(74) Representative: Henkel & Partner mbB

(57) **Abstract**

A tire inner liner composition (TILC) is disclosed comprising: (a) a rubber, (b) a filler, (c) a hydrogenated styrenic block copolymer (HSBC), and (d) optional additives. The HSBC comprises a block "S" composed of vinyl aromatic units and a block "R" composed of hydrogenated diene units. The HSBC has a general structure selected from: S-R-S, (S-R)ₙX, and mixtures thereof, X is a residue of a coupling agent and n is an integer from 2 to 30. The HSBC functions as a homogenizer, enabling uniform dispersion of the filler within the TILC to enhance mechanical properties, crack resistance, and barrier performance.

## Description

### FIELD

The disclosure relates to a tire inner liner composition and methods of preparation thereof.

### BACKGROUND

A tubeless tire offers several advantages over tube-type tires, including reduced weight, improved fuel efficiency, enhanced stability, etc. One of the critical components of the tubeless tire is the innermost layer, known as an inner liner, which helps retain air throughout the tire's service life. For optimal tire performance, the inner liner needs to offer excellent barrier and mechanical properties. In addition, it should adhere well to the rest of the tire structure to prevent premature failure.

A typical composition of the tire inner liner includes a rubber component, e.g., bromobutyl rubber, chlorobutyl rubber, etc. Bromobutyl rubber offers high cross-linking efficiency, contributing to its low permeability to gases, such as O₂, N₂, and CO₂. The tire inner liner composition also typically contains a high loading of fillers to enhance performance and durability. However, uniformly dispersing these fillers within the rubber matrix remains a challenge. To address this, filler dispersing agents (also known as homogenizers), including aliphatic and/or aromatic hydrocarbon resins, are commonly used in the art.

There is still a need for improved tire inner liner compositions incorporating a homogenizer based on hydrogenated styrenic block copolymers (HSBCs) that aids in dispersing fillers to enhance overall performance.

### SUMMARY

In one aspect, the disclosure relates to a tire inner liner composition (TILC) comprising, consisting essentially of, or consisting of: (a) 100 phr of a rubber; (b) 30 - 80 phr of a filler; (c) 3 - 25 phr of a hydrogenated styrenic block copolymer (HSBC); and (d) 0 - 40 phr of at least an additive. The HSBC comprises a block "S" composed of vinyl aromatic units, and a block "R" composed of hydrogenated diene units and optionally vinyl aromatic units. The HSBC has a general structure selected from: S-R-S, (S-R)ₙX, and mixtures thereof, X is a residue of a coupling agent and n is an integer from 2 to 30. The HSBC satisfies at least one of the following: (i) a vinyl aromatic unit content (VAC) of > 50 wt.%, a molecular weight (Mₚ) of the block "S" of < 50 kg/mol, and a molecular weight (Mₚ) of the block copolymer of 150 to 300 kg/mol; and (ii) a vinyl aromatic unit content (VAC) of < 50 wt.%, a molecular weight (Mₚ) of the block "S" of < 30 kg/mol, and a molecular weight (Mₚ) of the block copolymer of 50 to 150 kg/mol. Each of the above transitional terms (e.g., 'comprising,' 'consisting essentially of,' and 'consisting of') is intended to carry its conventional meaning as understood in patent law, or defined when appropriate.

In a second aspect, the TILC, after curing, has a dispersibility value (G' 10% / G'1%) of 0.50 to 0.90.

In a third aspect, the rubber is a mixture of a halobutyl rubber and a second rubber material in a weight ratio of 1:10 to 10:1.

In a fourth aspect, the halobutyl rubber is a bromobutyl rubber.

### DESCRIPTION

The following terms will be used throughout the specification.

"Consisting essentially of" means that the composition primarily includes the recited components and may additionally contain one or more components that do not materially affect the novel characteristics or intended function of the invention. In embodiments, such additional components are present in amounts of < 30 wt.%, < 20 wt.%, or < 10 wt.%, based on total weight of the composition.

"At least one of [a group such as A, B, and C]" or "any of [a group such as A, B, and C]" means a single member from the group, more than one member from the group, or a combination of members from the group. For example, at least one of A, B, and C includes, for example, A only, B only, or C only, as well as A and B, A and C, B and C; or A, B, and C, or any other all combinations of A, B, and C.

A list of embodiments presented as "A, B, or C" is to be interpreted as including the embodiments, A only, B only, C only, "A or B," "A or C," "B or C," or "A, B, or C."

"Any of A, B, or C" refers to one option from A, B, or C.

"Any of A, B, and C" refers to one or more options from A, B, and C.

"Inner liner" and "tire inner liner" are used interchangeably.

"Elastomer" is used interchangeably with the term "rubber," referring to any polymer or combination of polymers consistent with ASTM D1566 definition.

"Phr" refers to parts by weight per hundred parts of elastomer / rubber (of the sum of the elastomers if several elastomers / rubbers are present).

"Vinyl aromatic unit content" or VAC of a block copolymer refers to the weight percentage of polymerized vinyl aromatic monomers, e.g., styrene, para-methylstyrene, etc., in the block copolymer. VAC is calculated by dividing the total molecular weight of all vinyl aromatic units by the total molecular weight of the block copolymer. It can be determined using proton nuclear magnetic resonance spectroscopy (¹H NMR) and ¹³C NMR. VAC is sometimes used interchangeably with PSC (polystyrene content).

"Butylene unit content" refers to the content, in weight %, of the butylene units ("B") relative to all diene based units in a given polymer (e.g., hydrogenated block copolymer). The butylene units are formed through the polymerization of 1,3-butadiene monomer via 1,2-addition, followed by hydrogenation. The 1,3-butadiene monomer can also polymerize through 1,4-addition, which, upon hydrogenation, results in ethylene units ("E"). Both butylene and ethylene units can be present in the hydrogenated block copolymer, which can also contain vinyl aromatic units and/or other units derived from conjugated diene monomers, arranged in any order. The butylene unit content can be measured by ¹H NMR and ¹³C NMR. The butylene unit ("B") content is sometimes used interchangeably with "vinyl content" prior to hydrogenation.

"HSBC" refers to a hydrogenated styrenic block copolymer derived from the polymerization of 1,3-butadiene and/or isoprene monomers with vinyl aromatic monomers. In HSBC, a substantial proportion of the double bonds originating from the 1,3-butadiene and/or isoprene units are hydrogenated, achieving a hydrogenation level exceeding 95% or even 99%. The aromatic bonds, however, are hydrogenated to a level ranging from 0% to 15%.

"Molecular weight" or M_{w} refers to the polystyrene equivalent molecular weight in kg/mol of a polymer block or a block copolymer. M_{w} can be measured with gel permeation chromatography (GPC) using polystyrene calibration standards, such as is done according to ASTM 5296-19. The GPC detector can be an ultraviolet or refractive index detector or a combination thereof. The chromatograph is calibrated using commercially available polystyrene molecular weight standards. M_{w} of polymers measured using GPC so calibrated are polystyrene equivalent molecular weights or apparent molecular weights. M_{w} expressed herein is measured at the peak of the GPC trace and is commonly referred to as polystyrene equivalent "peak molecular weight," designated as Mₚ.

"Hydrogenation level" refers to the level (in %) of saturation of the double bonds (e.g., olefinic, aromatic, etc.) in a block copolymer, can be measured by ¹H NMR.

"Residual unsaturation" or RU refers to the level of olefinic unsaturation, i.e., carbon-carbon double bonds of a block copolymer, expressed in milliequivalent per gram (meq/g). One equivalent here is one mole of olefinic double bonds. RU can be measured using ¹H NMR or ozonolysis titration.

"Unit" refers to the structural building block derived from one monomer following its polymerization, representing a repeating entity that forms part of the polymer or copolymer chain. Unlike a "monomer," which is the individual molecule before polymerization, a "unit" is the transformed version of the monomer after undergoing the polymerization process. A polymerized unit can be further transformed into a hydrogenated unit or a functionalized unit.

"Coupling efficiency" or CE refers to the weight of coupled polymer molecules divided by the total weight of both coupled and uncoupled polymer molecules, expressed as a percentage (%). CE can be used to determine the amount of diblock or more generally of "uncoupled arms" content in the overall block copolymer. For example, if the coupling efficiency is 80%, the polymer will contain 20 wt.% diblock or uncoupled arms and 80 wt.% triblock and multi-arm species.

"Polydispersity index" or PDI refers to a ratio of a weight average molecular weight (M_{w}) to a number average molecular weight (Mₙ), sometimes also called as molecular weight distribution. PDI is used to indicate distribution of polymer chain molecular weights in a given polymer. The PDI can be calculated over the total GPC, or a fraction of the GPC such as a peak between two extreme apparent molecular weight values.

"Cured" or cross-linked or vulcanized are used interchangeably to refer to the state in which the tire inner liner composition has undergone chemical cross-linking, typically through a vulcanization process involving heat and a curing agent (e.g., sulfur, peroxide, etc.), resulting in a networked polymer structure with enhanced mechanical integrity.

"Dispersibility value" refers to a ratio of elastic storage modulus G' measured at 10% strain amplitude (G'10) to that measured at 1% strain amplitude (G'1), i.e., dispersibility value = G'10% / G'1%. This value is indicative of the micro-dispersion of a material (e.g., fillers) within a composition, such as rubber compounds after curing. A dispersibility value corresponds to better dispersion of the fillers and enhanced filler-filler interactions in the cured composition. The elastic storage modulus (G'), which represents the recoverable (elastic) portion of the material's mechanical response, can be measured using dynamic mechanical analysis (DMA) on the cured material.

"Payne Effect Test" refers to the characterization of changes in the elastic storage modulus (G') as a function of strain amplitude. This test is conducted on the cured material and utilizes DMA. G' reflects the elastic (recoverable) response of the cured material under cyclic loading and is the relevant parameter for evaluating the Payne Effect. As used herein, the dispersibility value is determined via the Payne Effect Test conducted at 70°C and a frequency of 1 Hz, in accordance with ASTM D8059, using carbon black as the filler.

The disclosure relates to a tire inner liner composition (TILC) containing: (a) rubber, (b) filler, (c) a hydrogenated styrenic block copolymer (HSBC), and (d) optional additives. The HSBC functions as a homogenizer, enabling uniform dispersion of the filler within the TILC composition to enhance mechanical properties, crack resistance, and barrier performance.

(Rubber): The rubber is a halobutyl rubber selected from the group consisting of chlorobutyl rubber, bromobutyl rubber, fluorobutyl rubber, iodobutyl rubber, copolymers thereof, and mixtures thereof. In embodiments, halobutyl rubber is a copolymer of an isobutylene and a diene-based monomer (e.g., isoprene, para-methylstyrene monomer, etc.), commonly referred to as haloisobutylene-isoprene rubber. The halobutyl rubber can comprise > 90 wt.% of isobutylene and < 10 wt.% of isoprene or para-methylstyrene, or, alternatively, 90 - 99.5 wt.% of isobutylene and 0.5 - 10 wt.% of isoprene or para-methylstyrene.

In embodiments, the halobutyl rubber is a bromobutyl rubber having a density of 0.87 - 0.96, or 0.89 - 0.94, or 0.90 - 0.94 g/cm³, measured according to ASTM D297. The bromobutyl rubber can contain an amount of bromine ranging from 0.5 - 5, or 1 - 4, or 1.5 - 3.5 wt.%, based on total weight of the bromobutyl rubber.

In embodiments, the rubber further comprises an additional rubber material (a second rubber material) at a halobutyl rubber to second rubber material weight ratio of 1:10 to 10:1, or 1:8 to 8:1, or 1:5 to 5:1, or 1:3 to 3:1. Examples of the second rubber material include ethylene propylene diene monomer rubber (EPDM), styrene-butadiene rubber (SBR), hydrogenated SBR, butadiene rubber (BR), synthetic polyisoprene rubber, natural rubber (NR), brominated-NR, chlorinated-NR, epoxylated NR, nitrile-hydrogenated butadiene rubber (HNBR), ethylene propylene rubber, maleic acid-modified ethylene propylene rubber, isobutylene-aromatic vinyl or diene monomer copolymers, brominated isobutylene p-methylstyrene copolymer, chloroprene rubber, epichlorohydrin homopolymers rubber, epichlorohydrin-ethylene oxide or allyl glycidyl ether copolymer rubber, epichlorohydrin-ethylene oxide-allyl glycidyl ether terpolymer rubber, chlorosulfonated polyethylene, chlorinated polyethylene, maleic acid-modified chlorinated polyethylene, methylvinyl silicone rubber, dimethyl silicone rubber, methylphenylvinyl silicone rubber, polysulfide rubber, vinylidene fluoride rubber, tetrafluoroethylene-propylene rubber, fluorinated silicone rubber, fluorinated phosphagen rubber, and mixtures thereof.

In embodiments, the second rubber material is a natural rubber (NR), which includes Hevea NR, non-Hevea NR (e.g., from guayule shrubs, dandelions (Taraxacum kok-saghyz (TKS)), and mixtures thereof.

The halobutyl rubber and/or second rubber material can be coupled, star-branched, and/or functionalized using a coupling, star-branching or functionalizing agent. In embodiments, the halobutyl rubber and/or second rubber material is end-group functionalized with a functional group to enhance its affinity for fillers, such as carbon black and/or silica. Examples of functional groups include C-Sn bonds, aminated functional groups (e.g., benzophenone), silanol or polysiloxane functional groups with silanol end groups, alkoxysilane groups, polyether groups, and the like.

(Fillers): The filler is selected from the group consisting of sand, talc, dolomite, calcium carbonate, carbon nanotube, carbon black, clay, silica, mica, wollastonite, feldspar, aluminum silicate, alumina, hydrated alumina, titanium dioxide, zinc oxide, ceramic microsphere, thermoplastic microsphere, barite, wood flour, wood fibers, carbon fibers, and mixture thereof. The filler can be surface treated before adding into the TILC.

In embodiments, the filler has an average particle size of < 500 nm, or < 300 nm, or 10 - 200 nm, or 20 - 150 nm, or 30 - 100 nm, or 10 - 50 nm.

In embodiments, the filler is carbon black selected from 100, 200, 300, 600, 700 or 900 series, e.g., N110, N115, N134, N220, N234, N326, N330, N339, N347, N351, N375, N550, N660, N683, N772, N990, etc., as designated by ASTM D-1765-82a. Carbon black can be a recycled form and can be provided as pelletized material or as an unpalletized flocculent mass. In embodiments, carbon black has a density of 1.5 - 2.1, or 1.55 - 2.0, or 1.6 - 1.95 g/cm³, measured according to ASTM D4894. Nitrogen surface area of the carbon black can range from 10 - 60, or 15 - 55, or 20 - 50, or 25 - 55, or 30 - 60 m²/g, measured according to ASTM D6556.

In embodiments, the filler is added in amounts of 30 - 80, or 35 - 75, or 40 - 70, of 50 - 80, or 30 - 70 phr, based on 100 phr of the rubber.

(Hydrogenated Styrenic Block Copolymers (HSBCs)): The HSBC is any of a linear, branched, or radial block copolymer, comprising at least one block "S" composed of vinyl aromatic units and at least one rubbery block "R" (block "R") composed of hydrogenated diene units and optionally vinyl aromatic units. The vinyl aromatic units are derived from polymerized vinyl aromatic monomers, while the hydrogenated diene units, prior to hydrogenation, are derived from polymerized conjugated diene monomers.

In embodiments, the HSBC is functionalized with at least one functional group, e.g., hydroxyl group, amino group, carboxyl group, acid anhydride group, epoxy group, isocyanate group, silanol group, silane group, and the like.

In embodiments, the HSBC has a general structure selected from: S-R, (S-R)ₙX, S-R-S, S-R-S-R, R-S-R-S-R, (R-S-R)ₙX, S-R-S-R-S, (S-R-S)ₙX, and mixtures thereof; n is an integer from 2 to 30, and X is residue of a coupling agent.

In embodiments, each block "R" is a block selected from E/B, E/B/S, EP/MB, EP/MB/S, E/B/EP/MB and combinations thereof.

In embodiments, block "R" is in the form of E/B composed of ethylene ("E") units and butylene ("B") units which are hydrogenated 1,4-butadiene units and hydrogenated 1,2-butadiene units, respectively.

In embodiments, block "R" is in the form of E/B/S composed of ethylene ("E") units, butylene ("B") unit, and vinyl aromatic units.

In embodiments, block "R" is in the form of EP/MB composed of ethylenepropylene (EP) units and methyl-butylene (MB) units. Each EP unit is a hydrogenated 1,4-isoprene unit and each MB unit is a hydrogenated 3,4-isoprene unit and a hydrogenated 1,2-isoprene unit.

In embodiments, block "R" is in the form of EP/MB/S composed of EP units, MB units, and vinyl aromatic units.

In embodiments, block "R" is in the form of E/B/EP/MB composed of ethylene ("E") units, butylene ("B") units, EP units, and MB units.

Examples of coupling agent X include bi- or polyfunctional compounds, for example divinylbenzene, halides of aliphatic or araliphatic hydrocarbons, such as 1,2-dibromoethane, bis(chloromethyl)benzene, silicon tetrachloride, dialkyl- or diarylsilicon dichloride, alkyl- or arylsilicon trichloride, tin tetrachloride, alkylsilicon methoxides, alkyl silicon ethoxides, polyfunctional aldehydes, such as terephthalic dialdehyde, ketones, esters, anhydrides, or epoxides. In embodiments, the coupling agent is selected from methyltrimethoxysilane, methyltriethoxysilane, tetramethoxysilane, dimethyladipate, gamma-glycidoxypropyltrimethoxy silane, and mixtures thereof. In embodiments, the HSBC has a coupling efficiency (CE) of > 65%, or > 70%, or 60 - 98%, or 65 - 95%, or 75 - 95%.

Examples of vinyl aromatic monomer include styrene, para-methylstyrene, para-ethylstyrene, para-n-propylstyrene, para-iso-propylstyrene, para-n-butylstyrene, para-sec-butylstyrene, para-iso-butylstyrene, para-t-butylstyrene, isomers of para-decylstyrene, isomers of para-dodecylstyrene, ortho-substituted styrene, meta-substituted styrene, alpha-methylstyrene, 1,1-diphenylethylene, and mixtures thereof.

In embodiments, the conjugated diene monomer is selected from the group consisting of isoprene, 1,3-butadiene, 2,3-dimethyl-1,3-butadiene, 1-phenyl-1,3-butadiene, 1,3-pentadiene, 1,3-hexadiene, 3-butyl-1,3-octadiene, farnesene, myrcene, piperylene, cyclohexadiene, and mixtures thereof.

In embodiments, each block "S" has a hydrogenation level of < 30%, or < 20%, or < 10%, or < 5%, based on total double bonds present in the block "S". In embodiments, diene units in each block "R" have a hydrogenation level of > 80%, or > 90%, or > 95%, or > 98%, or up to 100%, or 80 - 99%, or 90 - 98%.

In embodiments, the HSBC comprises a mixture of at least two block copolymers, selected from (i) diblock copolymers and (ii) multi-block copolymers having more than two blocks (e.g., triblock, tetrablock, pentablock, etc.). In embodiments, the diblock constitutes from 2 - 20, or 3 - 15, or 4 - 12, or > 2, or < 20 wt.%; the species with more than 2 blocks constitute from 80 - 98, or 85 - 97, or 88 - 96, or > 80, or < 98 wt.%, based on total weight of the HSBC.

Examples of HSBCs include styrene-ethylene/butylene-styrene (S-E/B-S), styrene-ethylene-propylene/methylene-butylene-styrene (S-EP/MB-S), styrene-ethylene/butylene/ethylene-propylene/methylene-butylene-styrene (S-E/B/EP/MB-S), styrene-ethylene/butylene/styrene-styrene (S-E/B/S-S), styrene-ethylene-propylene/methylene-butylene-styrene-styrene (S-EP/MB/S-S), and mixtures thereof.

In embodiments, the HSBC has a general structure of S-R-S, with: a) a vinyl aromatic unit content (VAC) of > 50, or > 52, or > 55, or < 70, or 50 - 70, or 52 - 68, or 55 - 65 wt.%, based on total weight of the HSBC; b) a molecular weight (Mₚ) of the block "S" of < 50, or < 40, or < 35, or > 10, or 10 - 50, or 15 - 45, or 20 - 40, or 15 - 35 kg/mol; c) a melt flow rate (MFR) of < 5, or < 3, or < 2, or < 1, or > 0.001, or 0.001 - 5, or 0.01 - 3 g/10 minutes, measured at 230°C with 5 kg load according to ASTM D1238; d) a butylene ("B") unit content of < 50, or < 45, or < 40, or > 20, or 20 - 50, or 25 - 45, or 30 - 40, or 30 - 50 wt.%, based on total weight of hydrogenated diene units in the HSBC; and e) a molecular weight (Mₚ) of HSBC of 150 - 300, or 170 - 290, or 200 - 280, or 220 - 300 kg/mol.

In embodiments, the HSBC has general structure of (S-R)ₙX, having: a) a vinyl aromatic unit content (VAC) of < 50, or < 45, or < 40, or < 35, or > 10, or 10 - 50, or 15 - 45, or 18 - 40 wt.%, based on total weight of the SBC; b) a molecular weight (Mₚ) of the block "S" of < 30, or < 25, or < 20, or < 15, or > 2, or 2 - 30, or 3 - 25, or 4 - 20, or 3 - 10 kg/mol; c) a melt flow rate (MFR) of > 5, or > 10, or > 20, or > 30, or < 300, or 10 - 300, or 20 - 280, or 25 - 260, or 30 - 240, or 20 - 50, or 30 - 55, or 190 - 240, or 200 - 230, measured at 230°C with 2.16 kg load according to ASTM D1238; d) a butylene ("B") unit content of > 50, or > 60, or > 70, or < 90, or 50 - 90, or 55 - 85, or 60 - 80, or 65 - 85 wt.%, based on total weight of hydrogenated diene units in the HSBC; and e) a molecular weight (Mₚ) of HSBC of 50 - 150, or 60 - 140, or 70 - 130, or 75 - 150, or 50 - 130 kg/mol.

In embodiments, the HSBC is added in amounts of 3 - 25, or 4 - 20, or 5 - 15, or 6 - 25, or 3 - 12 phr, based on 100 phr of the rubber.

(Curing Agent): In embodiments, the TILC comprises a curing agent selected from the group consisting of sulfur-based compounds, peroxides, bismaleimides, and mixtures thereof.

In embodiments, the curing agent comprises a vulcanizing agent and at least one of: vulcanizing accelerator, vulcanizing activator, vulcanizing inhibitor, anti-scorching agent, and mixtures thereof.

In embodiments, the vulcanizing agent is a sulfur-based compound selected from the group consisting of sulfur; sulfur donating curing agents, such as an amine disulfide, polymeric polysulfide or sulfur olefin adducts; insoluble polymeric sulfur; and mixtures thereof.

Examples of the vulcanizing accelerator include thiazoles such as 2-mercaptobenzothiazole, 2,2'-dithiobis(benzothiazole), N-cyclohexyl-2-benzothiazolesulfenamide, N-tert-butyl-2-benzothiazole-sulfenamide; guanidine vulcanization accelerators, such as diphenyl guanidine (DPG); thiuram vulcanizing accelerators, such as tetramethyl thiuram monosulfide, tetramethyl thiuram disulfide, dipentamethylene thiuram tetrasulfide, tetraethyl thiuram disulfide, tetraisobutyl thiuram disulfide, tetrabenzyl thiuram disulfide, and zinc thiuram; carbamate vulcanizing accelerators; and mixtures thereof.

The vulcanizing activator can be selected from the group consisting of an inorganic component, an organic component, and mixtures thereof. In embodiments, the inorganic vulcanizing activator can contain zinc oxide. In embodiments, the organic vulcanizing activator includes stearic acid, palmitic acid, lauric acid, zinc salts of each of the foregoing, or mixtures thereof. In embodiments, the vulcanizing activator is one or more thiourea compounds selected from N,N'-diphenylthiourea, trimethylthiourea, N,N'-diethylthiourea, N,N'-dimethylthiourea, N,N'-dibutylthiourea, ethylenethiourea, N,N'-diisopropylthiourea, N,N'-dicyclohexylthiourea, 1,3-di(o-tolyl)thiourea, 1,3-di(p-tolyl)thiourea, 1,1-diphenyl-2-thiourea, 2,5-dithiobiurea, guanylthiourea, 1-(1-naphthyl)-2-thiourea, 1-phenyl-2-thiourea, p-tolylthiourea, o-tolylthiourea, and mixtures thereof. Examples of other vulcanizing activators include zinc stearate, magnesium stearate, calcium stearate, and mixtures thereof.

Examples of the vulcanization inhibitor include alumina, aluminum hydrate, aluminum hydroxide, aluminum carbonate, aluminum nitride, aluminum magnesium oxide, pyrofilite, bentonite, boron nitride, silicon nitride, aluminum nitride, mica, kaolin, glass balloon, glass beads, calcium oxide, calcium hydroxide, calcium carbonate, magnesium hydroxide, magnesium oxide, magnesium dioxide, magnesium carbonate, titanium oxide, titanium dioxide, potassium titanate, barium sulfate, zirconium oxide, zirconium hydroxide, zirconium carbonate, crystalline aluminosilicates, calcium silicates, starch, gypsum (calcium sulfate hydrate), fly ash, and mixtures thereof. In embodiments, an amount of the vulcanization inhibitor added is from 0.01 - 1, or 0.02 - 0.8, or 0.05 - 0.5 phr, based on 100 phr of the rubber.

In embodiments, the curing agent is added in amounts of up to 30 phr, or 0.5 - 30, or 1 - 20, or 3 - 15, or 5 - 12, or 0.5 - 15 phr, based on 100 phr of the rubber.

(Optional Additives): In embodiments, the TILC further comprises additives selected from the group consisting of stabilizers, antioxidants, antiozonants, plasticizers, fillers, other resins, adhesion promoters, lubricants, processing aids, anti-fatigue agents, and mixtures thereof.

Examples of plasticizers include liquid diene polymers, aliphatic acid esters, hydrocarbon processing oil, tall oil pitch, modified tall oil pitch, polyolefin oil, naphthenic oil, paraffinic oil, distillate aromatic extract oil, medium extracted solvate oil, treated distillate aromatic extract oil, residual aromatic extract oil, treated residual aromatic extract oil, safety residual aromatic extract oil, mineral oil, vegetable oil, plasticizing ethers, plasticizing esters, plasticizing phosphates, plasticizing sulphonates, terpene derivatives, and mixtures thereof. Examples of vegetable oil include linseed oil, safflower oil, soybean oil, corn oil, cotton seed oil, turnip seed oil, castor oil, tung oil, pine oil, sunflower oil, palm oil, olive oil, coconut oil, groundnut oil, grapeseed oil, and mixtures thereof. The modified tall oil pitch can be selected from the group consisting of a pitch ester, a decarboxylated tall oil pitch, a soap of tall oil pitch, a thermally treated tall oil pitch, a thermally and catalytically treated tall oil pitch, and mixtures thereof.

In embodiments, the additive, if used, is added in amounts of up to 40 phr, or < 35, or 1 - 30, or 3 - 25, or 5 - 20, or 1 - 15 phr, based on 100 phr of the rubber.

(Optional Tackifying Resins): In embodiments, the TILC further comprises the tackifying resin selected from the group consisting of C₅ - C₉ hydrocarbon resins, hydrogenated C₅ - C₉ hydrocarbon resins, styrenated C₅ - C₉ hydrocarbon resins, terpenes, styrene modified terpenes, vinyl toluene-terpenes, phenolic resins, phenolic-modified terpene resins, fully hydrogenated or partially hydrogenated terpene resins, coumarone-indene resins, polyindene resins, poly(methyl indene) resins, rosin esters, rosin derivatives, and mixtures thereof.

In embodiments, the tackifying resin has a softening point of > 70°C, or > 75°C, or 70 - 150°C, or 75 - 130°C, or 80 - 120°C, measured according to ASTM E-28.

In embodiments, the tackifying resin has an acid number of > 20, or < 50, or 20 - 50 mg KOH/g, measured according to ASTM D465.

In embodiments, the tackifying resin is an octyl phenol resin.

In embodiments, the tackifying resin, if used, is added in amounts of up to 25 phr, or 1 - 20, or 3 - 15, or 1 - 10 phr, based on 100 phr of the rubber.

(Methods of Preparation of TILCs): The TILC can be prepared by using conventional mixing techniques including kneading, roller milling, extruder mixing, internal mixing (e.g., Banbury mixer), etc. The sequence of mixing and temperatures employed are known in art.

In embodiments, the TILC composition is prepared by mixing the components in at least one non-productive master-batch stage and a final productive mixing stage. The term non-productive master-batch stage is known in the art and generally understood to be a mixing stage(s) where no curing agent is added. The term final productive mixing stage is also known in the art and generally understood to be the mixing stage where the curing agent is added into the TILC. The TILC can be prepared by a process comprising more than one non-productive master-batch mixing stage.

In embodiments, the TILC is prepared by adding rubber, HSBC, filler, and optional additives in a non-productive master-batch mixing stage(s). The non-productive mixing can be conducted at a temperature of 70 - 200°C, or 75 - 180°C, or 80 - 150°C. In embodiments, the curing agent is added in a final or productive mixing stage and the mixing is performed until a temperature increased to 50 - 145°C, or 55 - 135°C, or 60 - 125°C to obtain the TILC. The final productive mixing stage can be conducted at a temperature below the curing temperature (e.g., < 150°C) to avoid unwanted pre-cure of the TILC.

In embodiments, the TILC is cured at a temperature ranging from 150 - 200°C, or 155 - 195°C, or 160 - 190°C for 1 - 60 minutes, 3 - 40 minutes, or 5 - 35 minutes, or 10 - 30 minutes.

(Properties of TILCs): The HSBC helps in enhancing the dispersibility of the filler in the TILC and provides balanced airtightness, shorter period of curing, improved hardness, and other mechanical properties.

Properties of both cured and uncured TILC compositions are described based on formulations containing, for the uncured composition, 100 phr of rubber, 30 - 80 phr of filler, 3 - 25 phr of a hydrogenated styrenic block copolymer, and optional additives. The cured TILC composition (or composition after curing) additionally includes a curing agent in an amount of 0.5 - 30 phr, based on 100 phr of the rubber.

In embodiments, a TILC, prior to curing, has an adhesive performance, as indicated by peel force, of > 45N, or > 50N, or > 53N, or 48 - 75N, or 50 - 70N, or 52 - 68N, measured by the ZDT (Zero Degree Tack) test.

In embodiments, the curing performance (cure state) of the TILC is evaluated based on the time required to reach 90% of the maximum torque (T_{c}90), as measured according to ASTM D5289. A shorter T_{c}90 time indicates faster curing. In embodiments, the TILC, after curing, exhibits a T_{c}90 of < 4.0 minutes, or < 3.8 minutes, or < 3.6 minutes, or < 3.5 minutes, or < 3.3 minutes, or < 3.0 minutes, or > 0.5 minutes, or 0.5 - 3.5 minutes.

In embodiments, a TILC, after curing, has a dispersibility value (G'10% / G'1%) of 0.50 - 0.90, or 0.52 - 0.88, or 0.55 - 0.85, or 0.60 - 0.82, or 0.65 - 0.80, as measured according to Payne Effect Test.

In embodiments, a TILC, after curing, has an increase in a dispersibility value (G' 10% / G'1%) of at least 10%, or > 12%, or > 15%, or < 60% relative to a dispersibility value of a cured TILC without the HSBC.

In embodiments, a TILC, after curing, has a Shore A hardness of 40 - 55, or 42 - 52, or 44 - 50, measured according to ASTM D2240.

In embodiments, a TILC, after curing, has a tensile strength of 5 - 30, or 7 - 25, or 8 - 20, or 8 - 30, or 5 - 15 MPa, measured according to ASTM D412.

In embodiments, a TILC, after curing, has an ultimate elongation of 500 - 800%, or 520 - 780%, or 540 - 750%, or 530 - 640%, measured according to ASTM D412.

In embodiments, a TILC, after curing, has a 100% modulus of 0.5 - 5, or 0.7 - 4, or 0.9 - 3.5, or 1 - 2.5, or 1.1 - 2.2 MPa, measured according to ASTM D412.

In embodiments, a TILC, after curing, has a 300% modulus of 1 - 12, or 1.5 - 10, or 2 - 8, or 2.5 - 7, or 3.5 - 8 MPa, measured according to ASTM D412.

In embodiments, a TILC, after curing, is subjected to cyclic deformation until crack initiation, and the number of cycles it withstands is measured in accordance with ASTM D430. In embodiments, the TILC, after curing, withstands > 400,000, > 430,000, > 450,000, or > 480,000 deformation cycles before the first crack appears.

In embodiments, a TILC, after curing, has an air permeability (by O₂ transmission rate) of < 220, or < 210, or < 200, or 100 - 220, or 150 - 210, or 160 - 200 cc/(m²/day), measured according to ASTM D3985.

(Applications): In embodiments, a TILC is formed into a sheet by processes known in the art. The sheet can be placed adjacent to an intermediate layer (e.g., carcass layer) of an uncured tire which can be formed on a tire building drum. Tires are generally built on a drum from at least three layers, namely, an outer layer, an intermediate layer, and an inner layer (e.g., inner liner).

Tires containing the inner liners can be intended to equip motor vehicles of passenger type, including two-wheel vehicles (e.g., motorcycles), three-wheel vehicles, four-wheel vehicles, and also industrial vehicles selected from vans and heavy vehicles such as buses, heavy road transport vehicles such as lorries, agricultural, or civil engineering vehicles.

(Analytical Methods): The HSBC in the tire inner liner composition can be detected using a combination of Fourier Transform Infrared Spectroscopy (FTIR), ¹H NMR, ¹³C NMR, and GPC techniques. ¹H NMR and ¹³C NMR can be used to identify the presence of vinyl aromatic units and hydrogenated diene units within the polymer. NMR provides direct evidence of the hydrogenation level, as seen through the disappearance or strong reduction of olefinic proton signals and enables estimation of the vinyl aromatic unit content (VAC) by integrating the aromatic versus aliphatic proton or carbon signals. GPC, particularly when coupled with multi-angle light scattering (MALS) or refractive index (RI) detection, can be employed to measure the molecular weight (Mₚ) of both the block "S" and the overall HSBC polymer.

To determine the HSBC's structure, S-R-S or (S-R)nX, Small-Angle X-ray Scattering (SAXS) or Transmission Electron Microscopy (TEM) can be utilized to assess its microphase-separated morphology. Additionally, Matrix-Assisted Laser Desorption/Ionization Time-of-Flight (MALDI-TOF) Mass Spectrometry may be used to detect coupling structures, such as the presence of X residues, and to confirm the polymer architecture in coupled (S-R)nX configurations.

Rubber in tire inner liners can be detected using FTIR which provides spectral fingerprints unique to rubber type, such as characteristic C=C, C-Cl, or C-Br signals, allowing rapid identification of the base polymer. ¹H NMR can further confirm the microstructure of the rubber (e.g., methyl or methylene signals, unsaturation levels). Pyrolysis-Gas Chromatography / Mass Spectrometry (Py-GC/MS) can be used to break down the rubber into volatile fragments, which are then analyzed for their mass spectra, offering a detailed chemical fingerprint.

Filler can be detected by Scanning Electron Microscopy with Energy-Dispersive X-ray Spectroscopy (SEM-EDS) which can image filler particles dispersed in the matrix and identify their elemental composition (e.g., Si for silica, C for carbon black, Mg/Si for talc). X-ray Diffraction (XRD) can reveal the crystalline phases present, useful for identifying mineral-based fillers such as clay or silica. Ash Content Analysis (via TGA or muffle furnace) can quantify the total inorganic content by burning off the organic matrix and weighing the residue, which correlates directly to filler content.

(Examples): The following examples are intended to be non-limiting.

The following test methods are used.

Crack resistance, which indicates the material's toughness, of cured TILCs is evaluated by subjecting unpierced specimens to cyclic deformation until cracks form, followed by observation of crack growth. This test is performed in accordance with ASTM D430, also known as the DeMattia Flex Fatigue test.

Zero Degree Tack (ZDT) test: The adhesion of uncured TILCs to a carcass compound is measured using a ZDT test with an Instron tensile testing equipment. In this setup, the ZDT tester is mounted on the crosshead of the Instron. Two specimens, one of uncured TILC and the other of carcass compound, are placed together in a holder. The tester then moves downward, applying a force of 20 N at a rate of 2 N/s. After holding this force for 0.5 seconds, the crosshead moves upward at a speed of 300 mm/minute, pulling the specimens apart. The load cell and crosshead displacement are used to measure the peel force and separation distance.

The components used in examples include:
HSBC-1 is a linear hydrogenated triblock copolymer (S-E/B/S-S) having VAC of 58 wt.%, Mₚ of block "S" of 29 kg/mol, Mₚ of block copolymer of 265 kg/mol, butylene ("B") unit content of 38 wt.%, and MFR of < 1 g/10 minutes at 230°C/5 kg.

HSBC-2 is a linear hydrogenated triblock copolymer (S-E/B/S-S) having VAC of 34 wt.%, Mₚ of block "S" of 7 kg/mol, Mₚ of block copolymer of 125 kg/mol, butylene ("B") unit content of 78 wt.%, CE of 93%, MFR of 43 g/10 minutes at 230°C/2.16 kg, and diblock content of 7 wt.%.

HSBC-3 is a linear hydrogenated triblock copolymer (S-E/B-S) having VAC of 20 wt.%, Mₚ of block "S" of 5 kg/mol, Mₚ of block copolymer of 83 kg/mol, butylene ("B") unit content of 78 wt.%, CE of 93%, MFR of 220 g/10 minutes at 230°C/2.16 kg, and diblock content of 7 wt.%.

BBR-1 is a bromobutyl rubber having density of 0.93 g/cm³, and 2 wt.% of bromine.

NR-1 is a natural rubber from Harwick Standard.

TR-1 is an octyl phenol resin (tackifying resin) having softening point of 85 - 95°C and acid number of 25 - 42 mg KOH/g, from Akrochem.

C-HydR-1 is a copolymerized hydrocarbon resin containing aromatic, naphthenic, and aliphatic components.

(Examples 1-3): TILCs were prepared by mixing components listed in table 1 using an internal mixer. BBR-1, NR-1, and HSBCs were first mixed for 30 minutes at a temperature of 90 - 95°C. Next, carbon black, TR-1, and paraffinic oil were added, and mixing was continued until temperature reached 125 - 130°C. Mixing was further continued until temperature reached 145 - 150°C, after which mixture cooled to ambient temperature to obtain a master-batch. The master-batch was then reintroduced into the mixer, with the initial temperature set between 70 - 75°C. At this stage, curing agents (stearic acid, magnesium oxide, zinc oxide, sulfur, 2-mercaptobenzothiazole) were added and mixed until the temperature reached to 100 - 105°C to obtain TILCs. C-Ex is a control example prepared using the same procedure, except that the HSBC was replaced with C-HydR-1.

**Table 1**

| All weights in phr | C-ex | Ex-1 | Ex-2 | Ex-3 |
|---|---|---|---|---|
| BBR-1 | 70 | 70 | 70 | 70 |
| NR-1 | 30 | 30 | 30 | 30 |
| Carbon black | 60 | 60 | 60 | 60 |
| Paraffinic oil | 5 | 5 | 5 | 5 |
| TR-1 | 7 | 7 | 7 | 7 |
| Stearic acid | 2 | 2 | 2 | 2 |
| Magnesium oxide | 0.2 | 0.2 | 0.2 | 0.2 |
| Zinc oxide | 3 | 3 | 3 | 3 |
| Sulfur | 0.5 | 0.5 | 0.5 | 0.5 |
| 2-Mercaptobenzothiazole | 1.5 | 1.5 | 1.5 | 1.5 |
| C-HydR-1 | 7.5 | - | - | - |
| HSBC-1 | - | 7.5 | - | - |
| HSBC-2 | - | - | 7.5 | - |
| HSBC-3 | - | - | - | 7.5 |

(Example 4): Curing of the TILCs was monitored by measuring the torque as a function of time using a Moving Disk Rheometer (MDR), in accordance with ASTM D5289. The compositions (specimens) were cured in a compression mold at 177°C for 15 minutes. The time required to reach 90% of the maximum torque (T_{c}90) was used as the curing time. Curing details are provided in table 2. The cured TILCs were subsequently used for further testing.

**Table 2**

| | Max. Torque (dNm) | Min. Torque (dNm) | T_{c}90 (minutes) |
|---|---|---|---|
| C-ex | 4.28 | 0.84 | 3.58 |
| Ex-1 | 5.72 | 1.02 | 2.97 |
| Ex-2 | 4.15 | 0.84 | 2.72 |
| Ex-3 | 4.95 | 0.84 | 2.82 |

ZDT test performance and the dispersibility of fillers in the compositions are presented in table 3. The hardness and other mechanical properties of the cured TILCs are shown in table 4. Crack resistance and air permeability of the cured TILC samples are presented in table 5.

**Table 3**

| | Peak force (N) | Dispersibility value = G'10/ G'1 |
|---|---|---|
| C-ex | 64 | 0.576 |
| Ex-1 | 53.5 | 0.695 |
| Ex-2 | 56.9 | 0.702 |
| Ex-3 | 65 | 0.737 |

**Table 4**

| | Shore A hardness | Tensile strength (Mpa) | Ultimate elongation (%) | 100% Modulus (Mpa) | 300% Modulus (Mpa) |
|---|---|---|---|---|---|
| C-ex | 47.7 | 9.5 | 792 | 1.01 | 3.14 |
| Ex-1 | 48.4 | 12.7 | 599 | 1.41 | 6.46 |
| Ex-2 | 45.6 | 12.3 | 634 | 1.25 | 5.62 |
| Ex-3 | 48.7 | 10.8 | 578 | 1.33 | 5.58 |

**Table 5**

| | Crack resistance properties | | Air Permeability (cc/m²/day) |
|---|---|---|---|
| | Number of cycles to crack initiation | Width of crack at 1 million cycles (mm) | |
| C-ex | 400,000 | 5 | 179 |
| Ex-1 | 500,000 | 8 | 215 |
| Ex-2 | 600,000 | 3 | 196 |
| Ex-3 | No crack | 0 | 191 |

## Claims

1. A tire inner liner composition comprising:
(a) 100 phr of a rubber;
(b) 30 to 80 phr of a filler;
(c) 3 to 25 phr of a hydrogenated styrenic block copolymer comprising:
a block "S" composed of vinyl aromatic units, and
a block "R" composed of hydrogenated diene units and optionally vinyl aromatic units,
wherein the hydrogenated styrenic block copolymer has a general structure selected from: S-R-S, (S-R)ₙX, and mixtures thereof, wherein X is a residue of a coupling agent and n is an integer from 2 to 30, and
wherein the hydrogenated styrenic block copolymer satisfies at least one of the following:
(i) a vinyl aromatic unit content (VAC) of > 50 wt.%,
a molecular weight (Mₚ) of the block "S" of < 50 kg/mol, and
a molecular weight (Mₚ) of the block copolymer of 150 to 300 kg/mol, and
(ii) a vinyl aromatic unit content (VAC) of < 50 wt.%,
a molecular weight (Mₚ) of the block "S" of < 30 kg/mol, and
a molecular weight (Mₚ) of the block copolymer of 50 to 150 kg/mol; and
(d) 0 to 40 phr of at least an additive.

2. The tire inner liner composition of claim 1, wherein the tire inner liner composition, after curing, has a dispersibility value (G' 10% / G' 1%) of 0.50 to 0.90.

3. The tire inner liner composition of any of claims 1-2, wherein the rubber is a mixture of a halobutyl rubber and a second rubber material in a weight ratio of 1:10 to 10: 1.

4. The tire inner liner composition of claim 3, wherein
the halobutyl rubber is a bromobutyl rubber; and
the second rubber material is selected from the group consisting of ethylene propylene diene monomer rubber (EPDM), styrene-butadiene rubber (SBR), hydrogenated SBR, butadiene rubber (BR), synthetic polyisoprene rubber, natural rubber (NR), maleic acid-modified ethylene propylene rubber, chloroprene rubber, epichlorohydrin homopolymers rubber, methylvinyl silicone rubber, dimethyl silicone rubber, methylphenylvinyl silicone rubber, polysulfide rubber, vinylidene fluoride rubber, tetrafluoroethylene-propylene rubber, fluorinated silicone rubber, and mixtures thereof.

5. The tire inner liner composition of any of claims 1-4, wherein the hydrogenated styrenic block copolymer has:
a vinyl aromatic unit content (VAC) of 50 to 70 wt.%;
a molecular weight (Mₚ) of the block "S" of 10 to 50 kg/mol; and
a molecular weight (Mₚ) of the block copolymer of 200 to 280 kg/mol.

6. The tire inner liner composition of claim 5, wherein the hydrogenated styrenic block copolymer has a butylene ("B") unit content of < 50 wt.%, based on total weight of hydrogenated diene units in the hydrogenated styrenic block copolymer.

7. The tire inner liner composition of any of claims 1-4, wherein the hydrogenated styrenic block copolymer has:
a vinyl aromatic unit content (VAC) of 10 to 50 wt.%;
a molecular weight (Mₚ) of the block "S" of 2 to 30 kg/mol; and
a molecular weight (Mₚ) of the block copolymer of 60 to 140 kg/mol.

8. The tire inner liner composition of claim 7, wherein the hydrogenated styrenic block copolymer has a butylene ("B") unit content of > 50 wt.%, based on total weight of hydrogenated diene units in the hydrogenated styrenic block copolymer.

9. The tire inner liner composition of any of claims 7-8, wherein the hydrogenated styrenic block copolymer has a diblock content of 2 to 20 wt.%, based on total weight of the hydrogenated styrenic block copolymer.

10. The tire inner liner composition of any of claims 1-9, wherein the tire inner liner composition further comprises 1 to 20 phr of a tackifying resin; and
wherein the tackifying resin is selected from the group consisting of C₅ to C₉ hydrocarbon resins, hydrogenated C₅ to C₉ hydrocarbon resins, styrenated C₅ to C₉ hydrocarbon resins, terpenes, styrene modified terpenes, vinyl toluene-terpenes, phenolic resins, phenolic-modified terpene resins, fully hydrogenated or partially hydrogenated terpene resins, coumarone-indene resins, polyindene resins, poly(methyl indene) resins, rosin esters, rosin derivatives, and mixtures thereof.

11. The tire inner liner composition of claim 10, wherein the phenolic resin is a octyl phenol resin having at least one of:
a softening point of > 70°C; measured according to ASTM E-28; and
an acid number of > 20 mg KOH/g, measured according to ASTM D465.

12. The tire inner liner composition of any of claims 1-11, wherein the tire inner liner composition has a peel force of > 45N, measured by the ZDT (Zero Degree Tack) test.

13. The tire inner liner composition of any of claims 1-11, wherein the tire inner liner composition, after curing, has a Shore A Hardness of 40 to 55, measured according to ASTM D2240.

14. The tire inner liner composition of any of claims 1-11, wherein the tire inner liner composition, after curing, has an air permeability of < 220 cc/(m²/day), measured according to ASTM D3985.

15. The tire inner liner composition of any of claims 1-11, wherein the tire inner liner composition, after curing, has at least one of:
a tensile strength of 5 to 30 MPa;
an ultimate elongation of 500 to 800%;
a 100% modulus of 0.5 to 5 MPa; and
a 300% modulus of 1 to 12 MPa, all are measured according to ASTM D412.
